# EUROPEAN PATENT APPLICATION

(11) **EP 4 460 094 A1**
(43) Date of publication of application: **06.11.2024**
(21) Application number: 22915251.7
(22) Date of filing: 30.12.2022
(51) Int. Cl.: H04W 40/12

(54) **DATA TRANSMISSION METHOD AND APPARATUS, AND TERMINAL**

(30) Priority: 31.12.2021 CN 202111676460
(71) Applicant: VIVO MOBILE COMMUNICATION CO., LTD., Dongguan, Guangdong 523863 (CN)
(72) Inventor: LV, Huazhang, Dongguan, Guangdong 523863 (CN)
(74) Representative: Lavoix
(86) International application number: PCT/CN2022/144336
(87) International publication number: WO 2023/126004

(57) **Abstract**

Embodiments of this application provide a data transmission method and apparatus, and a terminal, and pertain to the field of wireless communications technologies. The data transmission method includes: obtaining, by a terminal, a UE route selection policy URSP rule, where the URSP rule includes a first mapping relationship between at least one service type and route selection descriptor RSDs; and transmitting a to-be-sent data traffic of an application program based on the URSP rule.

## Description

### CROSS-REFERENCE TO RELATED APPLICATIONS

This application claims priority to Chinese Patent Application No. 202111676460.2, filed in China on December 31, 2021, which is incorporated herein by reference in its entirety.

### TECHNICAL FIELD

This application pertains to the field of wireless communications technologies, and specifically, relates to a data transmission method and apparatus, and a terminal.

### BACKGROUND

In the 3rd generation partnership project (3rd Generation Partnership Project, 3GPP) protocol, when an application on a terminal has traffic to send, the application can provide traffic characteristics of the to-be-sent application traffic, and the terminal (OS operating system or modem chip) obtains the traffic characteristics provided by the application, such as a destination IP address and fully qualified domain name (Fully Qualified Domain Name, FQDN) of the to-be-sent application traffic. The terminal performs matching between the traffic characteristics and a traffic descriptor (Traffic Descriptor, TD) parameter in a UE route selection policy (UE Route Selection Policy, URSP) rule on the terminal, and then after obtaining a traffic descriptor through matching, the terminal selects a route selection descriptor (Route Selection Descriptor, RSD) under the traffic descriptor. The traffic descriptor defines a session parameter of a PDU session for carrying the to-be-transmitted application traffic after the application traffic characteristics match a traffic descriptor. If the current UE already has a PDU session, and the session parameter of the PDU session is consistent with the RSD under the traffic descriptor selected by the terminal for the application traffic, the to-be-transmitted data of the application can be routed to the established protocol data unit (Protocol Data Unit, PDU) session. Alternatively, if the terminal selects an RSD under the traffic descriptor for the to-be-transmitted application traffic, and there is no such PDU session in the current terminal, the terminal may trigger establishment of a new PDU session, with a session parameter of the established PDU session being consistent with the session parameter of the PDU session in the selected RSD, and uses the PDU session to carry the to-be-transmitted application data traffic.

However, in the related art, a traffic descriptor in a URSP rule generally includes a destination IP address, an FQDN, and the like. For such traffic descriptors, a PDU session for carrying can be merely selected for characteristics of specific application traffic, such as a specific IP address or FQDN. To ensure that a URSP rule is present for each application traffic, the network side needs to send a plurality of URSP rules to the terminal. However, the inventors of this application found that there may be some commonalities for applications on the terminal and application traffic to be sent by the applications. For example, traffic to be sent by application 1 and traffic to be sent by application 2 both belong to a gaming service, and application traffic of such services has similar characteristics; therefore, a same URSP rule can be used for traffic matching, or a same PDU session can be selected for carrying. If the current URSP rule designed is used, traffic matching efficiency is relatively low, which does not facilitate management based on a service type by operators.

### SUMMARY

Embodiments of this application provide a data transmission method and apparatus, and a terminal, which can resolve the problem that matching cannot be implemented based on a service type according to a URSP rule.

According to a first aspect, a data transmission method is provided, including: obtaining, by a terminal, a UE route selection policy URSP rule, where the URSP rule includes a first mapping relationship between at least one service type and route selection descriptor RSDs; and transmitting a to-be-sent data traffic of an application program based on the URSP rule.

According to a second aspect, a data transmission apparatus is provided, including: a first obtaining module configured to obtain a UE route selection policy URSP rule, where the URSP rule includes a first mapping relationship between at least one service type and route selection descriptor RSDs; and a transmission module configured to transmit a to-be-sent data traffic of an application program based on the URSP rule.

According to a third aspect, a URSP rule configuration method is provided, including: obtaining, by a network-side device, a URSP rule, where the URSP rule includes a first mapping relationship between at least one service type and route selection descriptor RSDs; and configuring, by the network-side device, the URSP rule for a terminal.

According to a fourth aspect, a URSP rule configuration apparatus is provided, including: a second obtaining module configured to obtain a URSP rule, where the URSP rule includes a first mapping relationship between at least one service type and route selection descriptor RSDs; and a configuration module configured to configure the URSP rule for a terminal.

According to a fifth aspect, a terminal is provided, where the terminal includes a processor and a memory, and a program or instructions capable of running on the processor are stored in the memory. When the program or the instructions are executed by the processor, the steps of the method according to the first aspect are implemented.

According to a sixth aspect, a terminal is provided, including a processor and a communication interface, where the processor is configured to implement the steps of the method according to the first aspect, and the communication interface is configured to communicate with an external device.

According to a seventh aspect, a network-side device is provided, where the network-side device includes a processor, a memory, and a program or instructions stored in the memory and capable of running on the processor, and when the program or the instructions are executed by the processor, the steps of the method according to the third aspect are implemented.

According to an eighth aspect, a network-side device is provided, including a processor and a communication interface, where the processor is configured to implement the steps of the method according to the third aspect, and the communication interface is configured to communicate with an external device.

According to a ninth aspect, a data transmission system is provided, including: a terminal and a network-side device, where the terminal may be configured to perform the steps of the method according to the first aspect, and the network-side device may be configured to perform the steps of the method according to the third aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the steps of the method according to the first aspect or implement the steps of the method according to the third aspect.

According to a twelfth aspect, a computer program/program product is provided, where the computer program/program product is stored in a storage medium, and the computer program/program product is executed by at least one processor to implement the steps of the method according to the first aspect or the steps of the method according to the third aspect.

In the embodiments of this application, the URSP rule obtained by the terminal includes the first mapping relationship between at least one service type and RSDs, and traffic matching is performed for the to-be-sent data traffic of the application program based on the URSP rule, so as to implement traffic matching based on the service type, thereby improving the efficiency of traffic matching. This facilitates management based on a service type by operators.

### BRIEF DESCRIPTION OF DRAWINGS

FIG. 1 is a block diagram of a wireless communication system to which the embodiments of this application are applicable;
FIG. 2 is a flowchart of a data transmission method according to an embodiment of this application;
FIG. 3 is a flowchart of a URSP rule configuration method according to an embodiment of this application;
FIG. 4 is a schematic structural diagram of a data transmission apparatus according to an embodiment of this application;
FIG. 5 is a schematic structural diagram of a URSP rule configuration apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

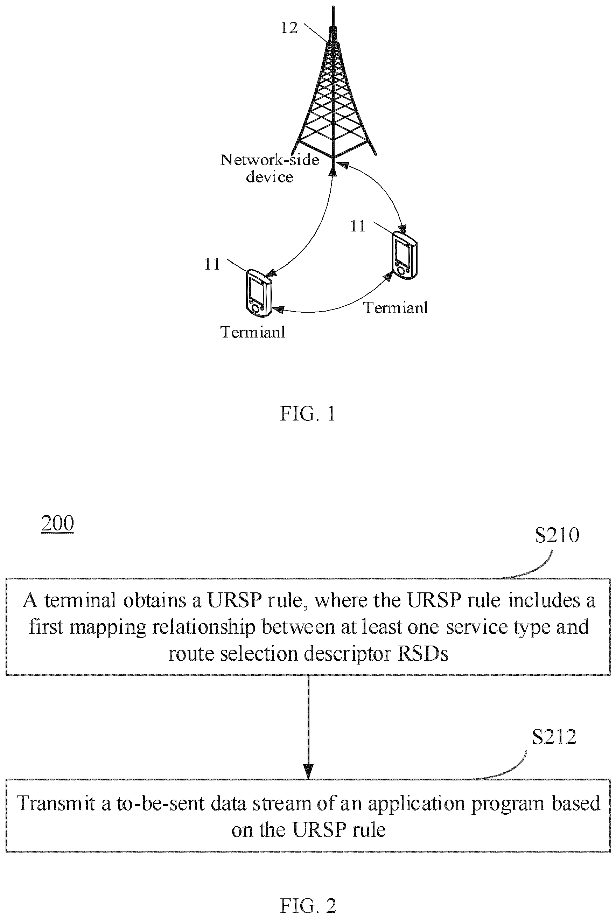

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device and/or a core network device, where the access network device 12 may also be referred to as a radio access network device, a radio access network (Radio Access Network, RAN), a radio access network function, or a radio access network unit. The access network device 12 may include a base station, a WLAN access point a Wi-Fi node, or the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS),a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration ( Centralized network configuration, CNC), a network storage function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

The following describes in detail a data transmission method provided in the embodiments of this application by using some embodiments and application scenarios thereof with reference to the accompanying drawings.

FIG. 2 is a flowchart of a data transmission method according to an embodiment of this application. As shown in FIG. 2, the method 200 mainly includes the following steps.

S210: A terminal obtains a URSP rule, where the URSP rule includes a first mapping relationship between at least one service type and route selection descriptors RSDs.

In a possible implementation of this embodiment of this application, the terminal may obtain the URSP rule from a network-side device. For example, the network-side device may define a service type of an application through an operator, and agree with the operator on RSDs corresponding to various service types, and select a PDU session corresponding to the RSD, for carrying. Alternatively, the network-side device may classify application traffic with similar characteristics into one service type according to characteristics of various application traffic, and determine RSD parameters corresponding to characteristics of this type of application traffic.

In a possible implementation of this embodiment of this application, the terminal may alternatively generate the URSP rule by itself. For example, the terminal may set the URSP rule (including a traffic descriptor, service type, and RSD under the URSP rule) based on historical data or a user may set the URSP rule through a terminal interface. The terminal may classify application traffic matching a same PDU session as a same service type, and determine an RSD corresponding to the PDU session as an RSD of the service type.

In a possible implementation, the URSP rule may further include a traffic category descriptor, and the traffic category descriptor is associated with the first mapping relationship.

For example, one type of traffic category descriptor can be added to traffic descriptors (Traffic descriptor) in the existing URSP rule, as shown in Table 1. Then each traffic category descriptor has one first mapping relationship, as shown in Table 2, that is, a mapping relationship between at least one traffic type and RSDs is set for each traffic category.

**Table 1**

| Traffic descriptor | This portion defines traffic descriptor components of the URSP rule. |
|---|---|
| Application descriptor | Including OS Id and OS App Id. |
| IP descriptor | Destination IP triplet (IP address or IPv6 network prefix, port number, and protocol ID of protocol over IP) |
| Domain name descriptor | FQDN(S) or a regular expression as a domain name matching criterion. |
| Non-IP descriptor | Descriptor of destination information of non-IP traffic. |
| DNN | This matches DNN information provided by the application program. |
| Connection capability | This matches information provided by a UE application program when requesting a network connection with specific capabilities. |
| Traffic category | This matches service type information provided by a UE application program, such as video, gaming, or enterprise. |

**Table 2**

| Traffic descriptor | RSD |
|---|---|
| Traffic category | Service type video: RSD1 (SSC mode=3, S-NSSAI=S-NSSAI-a), RSD2 (SSC mode=2, DNN=1) |
| | Service type enterprise: RSD1 (SSC mode=3, DNN=2), RSD2 (S-NSSAI=S-NSSAI-b, DNN=Internet) |

In a possible implementation, application traffic with specific characteristics can be divided into one traffic category, for example, traffic with a destination IP address segment of 10.1.*.* can be divided into one type, and then the traffic is further divided into at least one service type, which, for example, may include video service, gaming service, or the like, and each service type has a mapping relationship with one or more RSDs.

In a possible implementation, the first mapping relationship may include an association relationship between at least one service type descriptor and RSDs, and the service type descriptor is used to indicate the service type. For example, the traffic descriptor (Traffic descriptor) in the URSP rule includes at least one service type descriptor, as shown in Table 3, each service type descriptor indicates one service type, and an RSD associated with each service type descriptor is recorded in the URSP rule, as shown in Table 4.

**Table 3**

| Traffic descriptor | This portion defines traffic descriptor components of the URSP rule. |
|---|---|
| Video | Corresponding to video traffic set by the operator. |
| Gaming | Corresponding to gaming traffic set by the operator. |
| Enterprise | Corresponding to enterprise traffic set by the operator, for example, traffic of enterprise A. |

**Table 4**

| Traffic descriptor | RSD |
|---|---|
| Video | RSD1 (SSC mode=3, S-NSSAI=S-NSSAI-a), RSD2 (SSC mode=2, DNN=1) |
| Enterprise | RSD1 (SSC mode=3, DNN =2), RSD2 (S-NSSAI=S-NSSAI-b, DNN=Internet) |

In a possible implementation, because PDU sessions for carrying that may be required by data traffics of a same service type may be different. For example, considering that the PDU sessions for carrying required by different application programs may be different even all for video service streams, the terminal may perform differentiated processing. Therefore, in this possible implementation, the URSP rule further includes a second mapping relationship between traffic description parameters and RSDs and/or a third mapping relationship between service performance description parameters and RSDs for a same service type.

For example, in Table 5, for a first mapping relationship associated with one traffic category (Traffic categories) descriptor, a second mapping relationship between traffic description parameters (for example, DNN, APP descriptor, or IP triplet) and RSDs may be further set for the same service type.

**Table 5**

| Traffic descriptor | Class-2 traffic descriptor: |
|---|---|
| Traffic category | Service type video: |
| | When the traffic descriptor is destination IP=10. 1. 1.1 : RSD1 (SSC mode=3, S-NSSAI=S-NSSAI-a), RSD2 (SSC mode=2, DNN=1) |
| | When the traffic descriptor is FQDN=ABC.com: |
| | RSD1 (SSC mode=2, S-NSSAI=S-NSSAI-b), RSD2 (DNN=1) |
| | Service type enterprise: |
| | When the traffic descriptor is destination IP=100.1.1.1: |
| | RSD1 (SSC mode=3, S-NSSAI=S-NSSAI-a), RSD2 (SSC mode=2, DNN=1) |
| | When the App descriptor in traffic descriptor is |
| | OSId=Android1: |
| | RSD1 (SSC mode=2, S-NSSAI=S-NSSAI-c), RSD2 (DNN=1, WLAN Access) |

In this embodiment of this application, the traffic description parameter is used to describe traffic characteristics of the to-be-sent data traffic, such as destination IP triplet, FQDN, and DNN. In a possible implementation, the traffic description parameter includes at least one of the following:
(1) one or more pieces of destination IP address information; for example, an RSD corresponding to IP=10.1.1.1 recorded in the URSP rule is RSD1;
(2) one or more pieces of destination IP address segment information; for example, an RSD corresponding to IP=10.1.X.X and IP=100.1.X.X recorded in the URSP rule is RSD2 or RSD3;
(3) one or more pieces of fully qualified domain name information; for example, an RSD corresponding to FQDN=www.aaa.com recorded in the URSP rule is RSD2;
(4) one or more pieces of fully qualified domain name information with wildcards; for example, an RSD corresponding to FQDN=v.***.com recorded in the URSP rule is RSD1 or RSD2;
(5) one or more pieces of data network name DNN information; for example, an RSD corresponding to DNN=DNN1 recorded in the URSP rule is RSD1; and
(6) one or more application descriptions, for example, an RSD corresponding to OSId=Android1 recorded in the URSP rule is RSD1.

In this embodiment of this application, the service performance description parameter is used to describe requirements of to-be-sent traffic (that is, the to-be-sent data traffic) on network indicators and parameters. In a possible implementation, the service performance description parameter includes at least one of the following:
(1) one or more resolutions; for example, for video service stream, an RSD corresponding to resolution=4k recorded in the URSP rule is RSD1, and an RSD corresponding to resolution=1080P is RSD2; where the resolution is used to describe a video display format of a video stream to be sent by the terminal application, and this parameter affects a network transmission bandwidth to some extent;
(2) one or more resolution ranges; for example, for video service stream, when a resolution recorded in the URSP rule is greater than 4k, a corresponding RSD is RSD1;
(3) one or more bandwidths; for example, an RSD corresponding to bandwidth=200M recorded in the URSP rule is RSD1; where this parameter indicates that traffic to be sent by the terminal application has specific requirements on network bandwidth;
(4) one or more bandwidth ranges; for example, an RSD corresponding to bandwidth < 200M recorded in the URSP rule is RSD2;
(5) one or more end-to-end delays; for example, an RSD corresponding to end-to-end=40ms recorded in the URSP rule is RSD3; where this parameter indicates that for traffic to be sent by the terminal application, sending and receiving of its data packets has specific requirements on network delay;
(6) one or more end-to-end delay ranges; for example, an RSD corresponding to end-to-end < 40ms recorded in the URSP rule is RSD2;
(7) computing power of one or more service servers; for example, an RSD corresponding to computing power of service servers being 10 servers in the URSP rule is RSD2; where because the to-be-sent traffic needs to be sent to a specific server for processing, this parameter indicates that the traffic to be sent or the service to be sent by the terminal application has specific requirements on the computing power of the servers, so as to ensure service performance and service experience to some extent; and
(8) computing power range of one or more service servers; for example, an RSD corresponding to computing power of service servers being greater than 10 servers in the URSP rule is RSD3.

In this embodiment of the application, the service types may include one of the following:
(1) IP address information of a data traffic sender; for example, an IP triplet of a source of APP traffic;
(2) service type tag (tag); for example, tag authorized by an operator: video, gaming, enterprise traffic, and so on;
(3) service group; that is, different service types are represented by different service groups;
(4) application group (APP group); that is, different service types are represented by different application groups;
(5) group identifier; that is, different service types are represented by different group identifiers;
(6) video service; for example, HD video streaming or 4K video streaming;
(7) enterprise (Enterprise) service; and
(8) gaming (Gaming) service.

S212: Transmit a to-be-sent data traffic (data traffic or application traffic) of an application program based on the URSP rule.

In this embodiment of the application, the terminal may perform matching for the to-be-sent data traffic of the application program based on the URSP rule, and select an established PDU session to carry the to-be-sent data traffic according to a matching result, or create one new PDU session to carry the to-be-sent data traffic.

In a possible implementation, S212 may include the following steps 1 to 4.

Step 1: The terminal obtains a traffic characteristic parameter provided in the application program.

For example, when an application program on the terminal needs to send traffic, it can send a traffic characteristic parameter to the terminal (for example, an operating system of the terminal).

In this embodiment of the application, the traffic characteristic parameter is used to describe the characteristics of the traffic to be sent by the application program (that is, the to-be-sent data traffic). For example, the traffic description parameter may include at least one of the following:
(1) First indication information. The first indication information is used to indicate a service type of the to-be-sent data traffic. For example, the first indication information may indicate that the service type of the to-be-sent data traffic is video service, gaming service, enterprise service, or the like. The service type of the application may be determined by the operator. The operator may sign contracts with an APP provider to classify application traffic of the application into a specific service type. When the application program on the terminal has traffic to send, the application program may indicate a service type to which the traffic belongs.
(2) Target traffic description parameter.
   The application may provide description parameters of the to-be-sent traffic, and optionally, the target traffic description parameter provided by the application program may include at least one of the following:
   a) Destination IP information, for example, IP triplet, or destination IP address segment information.
      For example, the target traffic description parameter may be: destination IP=10.1.1.1 and port number=80 traffic, indicating destination address information of the traffic.
   b) Fully qualified domain name (FQDN) information, or FQDN information with wildcards.
      For example, the target traffic description parameter may be FQDN=aaa.com, indicating that the traffic needs to be sent to aaa.com.
   c) Data network name (Data Network Name).
      For example, the target traffic description parameter may alternatively be DNN=DNN1, indicating that the traffic needs to be sent to DNN1.
(3) Target service performance description parameter. The target service performance description parameter is used to indicate a service demand for to-be-sent traffic of the application program.

Usually, the to-be-sent data traffic of the application program has specific demands on the communication network, such as communication bandwidth and the shortest end-to-end delay required by the data traffic. Therefore, the application program may indicate the service performance description parameter for the to-be-sent data traffic. For services provided by different APPs, if performance parameters of these services are similar, the terminal can select, based on the URSP rule, a same PDU session for carrying or transmission.

Optionally, the target service performance description parameter includes at least one of the following:
(1) Resolution. If the to-be-sent application traffic is video service, a resolution of the to-be-sent traffic of the application program can be indicated. For example, the traffic characteristic parameter provided by the application program may include: resolution =1080P high-definition video.
(2) Bandwidth, indicating a bandwidth required by the to-be-sent traffic of the application program. For example, a traffic parameter provided by the application program may include: bandwidth=200M.
(3) End-to-end delay, indicating a delay requirement of the traffic to be sent by the application program. For example, a traffic parameter provided by the application program may include: end-to-end delay=40ms. If the delay requirement indicated by the application program is relatively high, for example, low-delay transmission is required, a selected PDU session for carrying the application traffic also needs to guarantee a relatively low end-to-end delay.
(4) Computing power of the service server, indicating a computing power requirement of the application program for the service server. For example, the target service performance description parameter provided by the application program may include: 10 servers.

Step 2: The terminal determines a target service type of the to-be-sent data traffic based on the traffic characteristic parameter.

In a possible implementation, the determining a target service type of the to-be-sent data traffic based on the traffic characteristic parameter may include one of the following:
(1) Determining a target service type of the to-be-sent data traffic according to the first indication information. That is, if the traffic characteristic parameter includes the first indication information, the target service type of the to-be-sent data traffic can be determined directly according to the first indication information.
(2) Determining the target service type corresponding to the target traffic description parameter based on a preset correspondence between traffic description parameters and service types. For example, if the first indication information is not included in the traffic characteristic parameter, the target service type can be determined based on the target traffic description parameter included in the traffic characteristic parameter.
   In this embodiment of the application, a correspondence between traffic description parameters and service types can be stored inside the terminal, and the terminal may convert the target traffic description parameter of the to-be-sent traffic provided by the application program on the terminal into a corresponding service type according to the mapping relationship. For example, when a traffic characteristic of the to-be-sent traffic of the application on the terminal is destination IP=10.1.X.X and IP=100.1.X.X, and at that time, the terminal can have such capability to map or identify both the to-be-sent traffic as a gaming service, so as to establish a relationship between the to-be-sent traffic and the service type.
(3) Determining the target service type corresponding to the target service performance description parameter based on a preset correspondence between service performance description parameters and service types.

In this embodiment of the application, a correspondence between service performance description parameters and service types can be stored inside the terminal, and the terminal may convert the target service performance description parameter of the to-be-sent traffic provided by the application program on the terminal into a corresponding service type according to the mapping relationship. For example, when the service performance description parameter of the traffic for the to-be-sent traffic provided by the application on the terminal is: end-to-end delay of 40ms, and at that time, the terminal can have such capability to map or identify the to-be-sent traffic as a video service, so as to establish a relationship between the to-be-sent traffic and the service type.

That is, in a possible implementation, the application program may directly provide the first indication information, and the terminal may directly determine, according to the first indication information, the target service type of the traffic to be sent by the application program. Alternatively, in another possible implementation, the application program may indicate the service performance description parameter instead of providing the first indication information, and a mapping relationship between service performance description parameters and service types is stored in the terminal. In this case, according to the preset mapping relationship between service performance description parameters and service types, the terminal can determine the target service type corresponding to the traffic to be sent by the target application. Alternatively, the application program further indicates a traffic description parameter of the to-be-sent traffic, and one mapping relationship between service performance description parameters and service types is present in the terminal. In this case, according to the preset mapping relationship between traffic descriptions and service types, the terminal can determine the target service type corresponding to the to-be-sent data traffic.

For example, for the traffic description parameter, such a mapping relationship can be preset in the terminal. For example, when the application traffic to be sent has FQDN=v.aaa.com and www.bbb.com, such application traffic is mapped into a video service. Alternatively, when a destination IP of the to-be-transmitted application traffic belongs to 192.168.X.X, for example, 192.168.0.1 and 192.168.0.2, the terminal may identify application traffic corresponding to this set of IP addresses as APP services of one enterprise, for example, office network traffic of a local enterprise A, that is, a service with a destination IP belonging to 192.168.X.X is an enterprise service. Through such settings, the target service type to which the application program belongs is determined based on target wildcard description information provided in the application program.

For another example, for the target service performance description parameter, such a mapping relationship can be preset in the terminal. For example, when the traffic performance parameter of the traffic to be sent by the application is: bandwidth of 200M or video resolution of 1080P, the terminal can identify that these services belong to video services (or can be subdivided into small categories, such as 1080P video), and then, based on characteristics of the video services, the terminal selects a PDU session meeting service performance for carrying.

In a possible implementation, the URSP rule may record a traffic category descriptor, and the traffic category descriptor is associated with the first mapping relationship, as shown in Table 1 and Table 2.

Therefore, in a possible implementation, the determining the target service type corresponding to the target traffic description parameter based on a preset correspondence between traffic description parameters and service types may include: obtaining a target traffic category descriptor matching the traffic characteristic parameter from the URSP rule, and obtaining the target service type corresponding to the target traffic description parameter from a first mapping relationship associated with the target traffic category descriptor. For example, if the terminal obtains the traffic category descriptor in Table 2 through matching based on the traffic characteristic parameter provided by the application program, the terminal obtains the target service type corresponding to the target traffic description parameter from an RSD associated with the traffic category descriptor.

In a possible implementation, the determining the target service type corresponding to the target service performance description parameter based on a preset correspondence between service performance description parameters and service types may include: obtaining a target traffic category descriptor matching the traffic characteristic parameter from the URSP rule, and obtaining the target service type corresponding to the target service performance description parameter from the first mapping relationship associated with the target traffic category descriptor.

Step 3: Select a target RSD matching the target service type from the URSP rule.

In a possible implementation, in step 3, the terminal selects the target RSD matching the target service type according to the first mapping relationship between service types and RSDs in the URSP rule.

For example, if an APP on the UE has APP traffic to send, the APP can mark a service type of the APP traffic, that is, whether the traffic category marking the traffic is video, gaming, or enterprise. Assuming that a stream to be sent by this APP is a video data traffic, the terminal can directly identify the service type, and perform matching for the traffic based on the traffic category in the URSP rule to obtain the video service through matching. There may be an RSD under traffic categories. For example, in Table 4, one video subtype is set under traffic categories, and this subtype corresponds to an RSD, for example, SSC mode =3, and S-S-NSSAI= S-NSSAI-a-A. Then, the terminal may select this RSD and use a PDU session corresponding to this RSD to carry all video streams related to video.

In a possible implementation, in step 3, the terminal may alternatively obtain a target traffic category descriptor matching the traffic characteristic parameter from the URSP rule, and selecting a target RSD matching the target service type according to a first mapping relationship associated with the target traffic category descriptor. For example, in a case that the traffic category descriptor is recorded in the URSP rule and the traffic category descriptor is associated with the first mapping relationship, the terminal may first obtain a target traffic category descriptor matching the traffic characteristic parameter from the URSP rule, and then select a target RSD matching the target service type from the first mapping relationship associated with the target traffic category descriptor.

Because a same type of service streams may require different PDU sessions for carrying, in another possible implementation, in step 3, the terminal may configure a corresponding RSD according to the target service type and the target traffic description parameter provided by the application program. Therefore, in this possible implementation, step 2 may include: obtaining the target service type through matching from the URSP rule, and selecting a target RSD matching the target traffic description parameter from a second mapping relationship between traffic description parameters and RSDs for the target service type.

For example, considering that even the same type of video service traffic may require different PDU sessions for carrying, after matching of the traffic category or service type, the traffic descriptor, such as DNN, APP descriptor, or IP triplet may be further used for matching. As shown in Table 5, this case is equivalent to using the traffic descriptor twice under traffic categories.

For example, if APP 1 in the UE has traffic to send, and traffic categories=video is marked, the destination IP:10.1.1.1 to which the traffic needs to be sent is provided. Then, based on the URSP rule, it is first identified as video traffic, and Traffic categories=video is obtained through matching. Then, the following description is made under Traffic categories=video in the URSP rule:
- when IP triplet=10.1.1.1, RSD1 or RSD2 is used;
- when FQDN=aaa.com, RSD3 is used; and
- when DNN=DNN1, RSD1, RSD2, or RSD3 may be used.

Therefore, it is equivalent to using the traffic descriptor again after matching of the traffic categories. This purpose is to distinguish different PDU sessions for carrying video streams of video. For example, the target RSD that APP 1 matches may be RSD1 or RSD2.

Alternatively, an RSD may be directly selected for the same video stream, which is undifferentiated carrying, that is, a PDU session corresponding to RSD =1 can be used for carrying all video streams.

In addition, because different service streams of a same service stream type may have different network bearer requirements, in a possible implementation, the selecting the target RSD matching the target service type from the URSP rule may include: obtaining the target service type through matching from the URSP rule, and selecting the target RSD matching the target service performance description parameter from the third mapping relationship between service performance description parameters and RSDs under the target service type.

For example, even for video streams or application streams of video, different video streams or application streams have different network bearer requirements due to different service performance description parameters.

For example, a video stream of APP1 has a resolution of 1080P and a required bandwidth of 200M; however, a video stream of APP2 has a resolution of 4K and a required bandwidth of 500M, and an end-to-end delay is expected to be less than 30ms. Therefore, when the APP traffic has specific service characteristic description, differentiated processing needs to be performed during matching or selection of a specific PDU session.

If APP 1 of the UE has traffic to send, APP 1 marks traffic categories=video, and then provides several service demands of the traffic:
- 1080P: resolution
- bandwidth: 200M
- end-to-end delay: 40ms
- computing power of service servers: 10 servers; and so on.

Then, the terminal can first perform mapping of the application data traffic based on its own terminal capability and a service performance description parameter to obtain a service type to which the application data traffic belongs; or, the terminal may directly obtain, according to indication information sent by the application, that the to-be-sent data traffic is video. In this case, the terminal matches the application data traffic to Traffic categories=video according to the URSP rule. According to specific network requirements of the traffic, the URSP rule may further provide the following description under Traffic categories=video:
- delay is less than 40ms, and a PDU session corresponding to RSD1 or RSD2 may be used;
- for 1080P video, RSD1, RSD2, or RSD3 may be used;
- bandwidth, the PDU session corresponding to RSD1 supports 400M, the PDU session corresponding to RSD2 supports 200M, and the PDU session corresponding to RSD3 supports 500M; and
- computing power: providing computing power of PDU sessions corresponding to different RSDs, or a computing power status of a service server connected to the PDU session.

In this case, for the to-be-sent traffic of APP1, the PDU session corresponding to RSD1 or RSD3 can be selected to carry the traffic of APP 1. Therefore, the terminal further has such capability: based on the service performance description parameter of the to-be-sent traffic of the application, performing mapping of a service type for the traffic, and further mapping or classifying the traffic into a suitable PDU session for transmission, that is, to correspond to a specific RSD.

Step 4: Transmit the to-be-sent data traffic by using a protocol data unit PDU session corresponding to the target RSD.

In a possible implementation, a target PDU session may be selected from the established PDU sessions to carry the to-be-transmitted data of the application program, where the target PDU session is a PDU session corresponding to the target RSD. For example, if a PDU session corresponding to the target RSD is present in the established PDU sessions, the PDU session corresponding to the target RSD can be selected from the established PDU sessions to carry the to-be-transmitted data of the application program. For example, the target RSD of the application program includes RSD1 and RSD2, and the terminal has established a PDU session corresponding to RSD1. In this case, the PDU session is selected to carry the to-be-transmitted data of the application program, thus reducing PDU session resources. Usually, the RSD mainly contains some parameters or attributes of the PDU session, such as SSC connection mode, DNN, and S-NSSAI. When the terminal uses the URSP rule to select an RSD, it means to use the PDU session in the terminal that contains the attributes describing the PDU session in the RSD to carry the application traffic.

Alternatively, a new PDU session corresponding to the target RSD can be created to carry the to-be-transmitted data of the application program. For example, if a PDU session corresponding to the target RSD is absent in the established PDU sessions, a new PDU session corresponding to the target RSD can be created by using the PDU session parameter contained in the target RSD to carry the to-be-transmitted data of the application program.

The foregoing solution provided in this embodiment of the application can improve the communication efficiency and facilitates management according to a service URSP rule by operators.

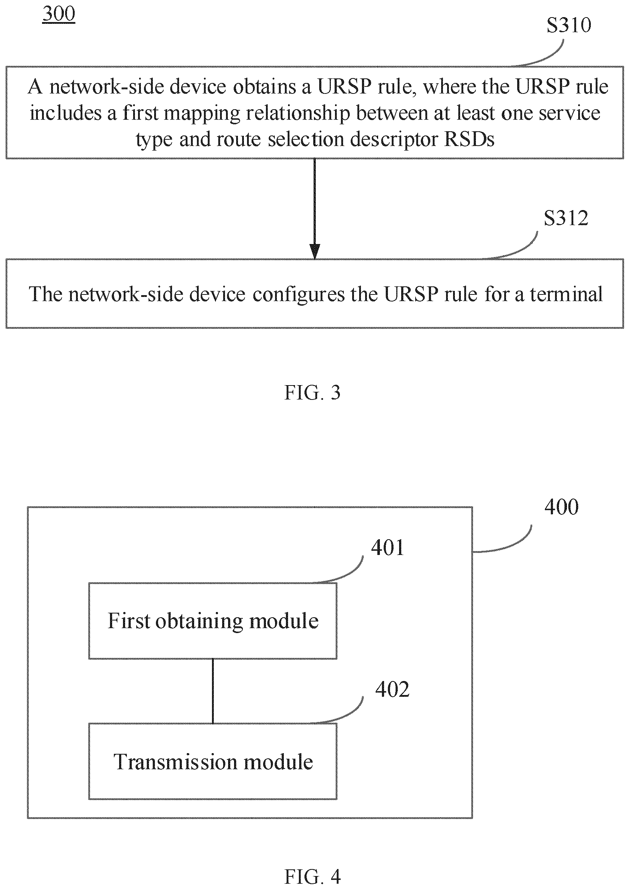

FIG. 3 is a schematic flowchart of a URSP rule configuration method according to an embodiment of this application. As shown in FIG. 3, the method 300 mainly includes the following steps:

S310: A network-side device obtains a URSP rule, where the URSP rule includes a first mapping relationship between at least one service type and route selection descriptor RSDs.

For example, the network-side device may define a service type of an application through an operator, and agree with the operator on RSDs corresponding to various service types. Alternatively, the network-side device may classify application traffic with similar characteristics into one service type according to characteristics of various application traffic, and determine RSD parameters corresponding to characteristics of this type of application traffic.

S312: The network-side device configures the URSP rule for a terminal.

The URSP rule in the method 300 is the same as the URSP rule in the method 200. For details, refer to the description in the method 200.

In a possible implementation, the URSP rule further includes a traffic category descriptor, and the traffic category descriptor is associated with the first mapping relationship.

In a possible implementation, the first mapping relationship includes an association relationship between at least one service type descriptor and RSDs, and the service type descriptor is used to indicate the service type.

In a possible implementation, the URSP rule further includes a second mapping relationship between traffic description parameters and RSDs and/or a third mapping relationship between service performance description parameters and RSDs for a same service type.

In a possible implementation, the traffic description parameter includes at least one of the following:
one or more pieces of destination IP address information;
one or more pieces of destination IP address segment information;
one or more pieces of fully qualified domain name information;
one or more pieces of fully qualified domain name information with wildcards;
one or more pieces of data network name DNN information; and
one or more application descriptions.

In a possible implementation, the service performance description parameter includes at least one of the following:
one or more resolutions;
one or more resolution ranges;
one or more bandwidths;
one or more bandwidth ranges;
one or more end-to-end delays;
one or more end-to-end delay ranges;
computing power of one or more service servers; and
computing power range of one or more service servers.

In a possible implementation, the service type includes one of the following:
IP address information of a data traffic sender;
service type tag;
service group;
application group;
group identifier;
video service;
enterprise service; and
gaming service.

In the data transmission method provided in the embodiments of this application, the execution subject may be a data transmission apparatus. In the embodiments of this application, the data transmission method being performed by the data transmission apparatus is used as an example to describe the data transmission apparatus provided in the embodiments of this application.

FIG. 4 is a schematic structural diagram of a data transmission apparatus according to an embodiment of this application. As shown in FIG. 4, the apparatus 400 mainly includes: a first obtaining module 401 and a transmission module 402.

In this embodiment of this application, the first obtaining module 401 is configured to obtain a UE route selection policy URSP rule, where the URSP rule includes a first mapping relationship between at least one service type and route selection descriptor RSDs.

The transmission module 402 is configured to transmit a to-be-sent data traffic of an application program based on the URSP rule.

In a possible implementation, that the transmission module 402 is configured to transmit a to-be-sent data traffic of an application program based on the URSP rule includes:
obtaining a traffic characteristic parameter provided in the application program;
determining a target service type of the to-be-sent data traffic based on the traffic characteristic parameter;
selecting a target RSD matching the target service type from the URSP rule; and
transmitting the to-be-sent data traffic by using a protocol data unit PDU session corresponding to the target RSD.

In a possible implementation, the traffic characteristic parameter includes at least one of the following: first indication information, where the first indication information is used to indicate the service type of the to-be-sent data traffic; target traffic description parameter; and target service performance description parameter.

That the transmission module 402 determines the target service type of the to-be-sent data traffic based on the traffic characteristic parameter includes one of the following:
determining a target service type of the to-be-sent data traffic according to the first indication information;
determining the target service type corresponding to the target traffic description parameter based on a preset correspondence between traffic description parameters and service types; and
determining the target service type corresponding to the target service performance description parameter based on a preset correspondence between service performance description parameters and service types.

In a possible implementation, the traffic characteristic parameter includes at least one of the following: first indication information, where the first indication information is used to indicate the service type; target traffic description parameter; and target service performance description parameter.

That the transmission module 402 selects the target RSD matching the target service type from the URSP rule includes at least one of the following:
selecting a target RSD matching the target service type according to the first mapping relationship between service types and RSDs in the URSP rule;
obtaining the target service type through matching from the URSP rule, and selecting a target RSD matching the target traffic description parameter from a second mapping relationship between traffic description parameters and RSDs for the target service type; and
obtaining the target service type through matching from the URSP rule, and selecting a target RSD matching the target service performance description parameter from a third mapping relationship between service performance description parameters and RSDs for the target service type.

In a possible implementation, that the transmission module 402 transmits the to-be-sent data traffic by using the protocol data unit PDU session corresponding to the target RSD includes one of the following:
selecting a target PDU session from established PDU sessions to transmit the to-be-transmitted data traffic of the application program, where the target PDU session is a PDU session corresponding to the target RSD; or
establishing a new PDU session corresponding to the target RSD by using a PDU session parameter contained in the target RSD to transmit the to-be-transmitted data traffic of the application program.

The data transmission apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The data transmission apparatus provided in this embodiment of this application is capable of implementing the processes implemented by the terminal in the method embodiments in FIG. 2 and FIG. 3, with the same technical effects achieved. To avoid repetition, details are not described herein again.

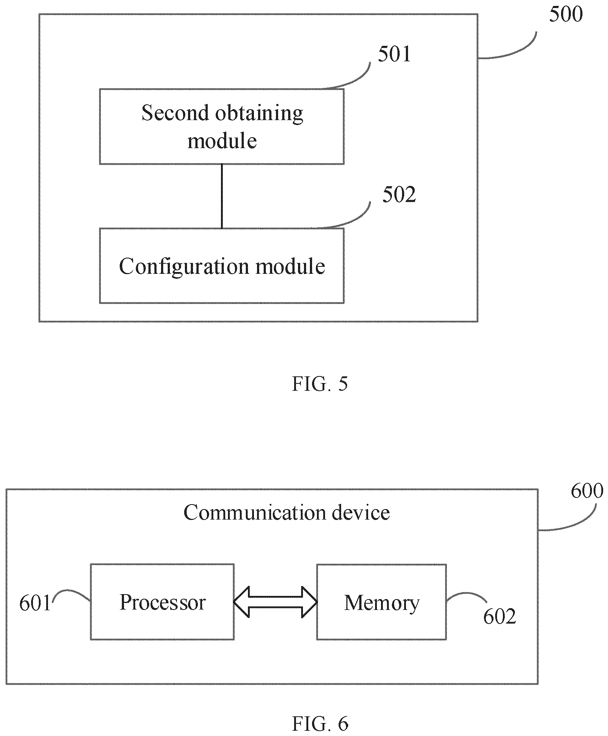

FIG. 5 shows a schematic structural diagram of a URSP rule configuration apparatus according to an embodiment of this application. As shown in FIG. 5, the apparatus 500 mainly includes: a second obtaining module 501 and a configuration module 502.

In this embodiment of this application, the second obtaining module 501 is configured to obtain a URSP rule, where the URSP rule includes a first mapping relationship between at least one service type and route selection descriptor RSDs; and a configuration module 502 is configured to configure the URSP rule for a terminal.

In a possible implementation, the URSP rule further includes a traffic category descriptor, and the traffic category descriptor is associated with the first mapping relationship.

In a possible implementation, the first mapping relationship includes an association relationship between at least one service type descriptor and RSDs, and the service type descriptor is used to indicate the service type.

In a possible implementation, the URSP rule further includes a second mapping relationship between traffic description parameters and RSDs and/or a third mapping relationship between service performance description parameters and RSDs for a same service type.

The data transmission apparatus provided in this embodiment of this application is capable of implementing the processes implemented by the network-side device in the method embodiments in FIG. 2 and FIG. 3, with the same technical effects achieved. To avoid repetition, details are not described herein again.

Optionally, as shown in FIG. 6, an embodiment of this application further provides a communication device 600, including a processor 601, a memory 602, and a program or instructions stored in the memory 602 and capable of running on the processor 601. For example, when the communication device 600 is a terminal and when the program or the instructions are executed by the processor 601, the steps of the foregoing embodiments of the data transmission method are implemented, with the same technical effects achieved. When the communication device 600 is a network-side device and when the program or the instructions are executed by the processor 601, the steps of the foregoing embodiments of the URSP rule configuration method are implemented, with the same technical effects achieved. To avoid repetition, details are not described herein again.

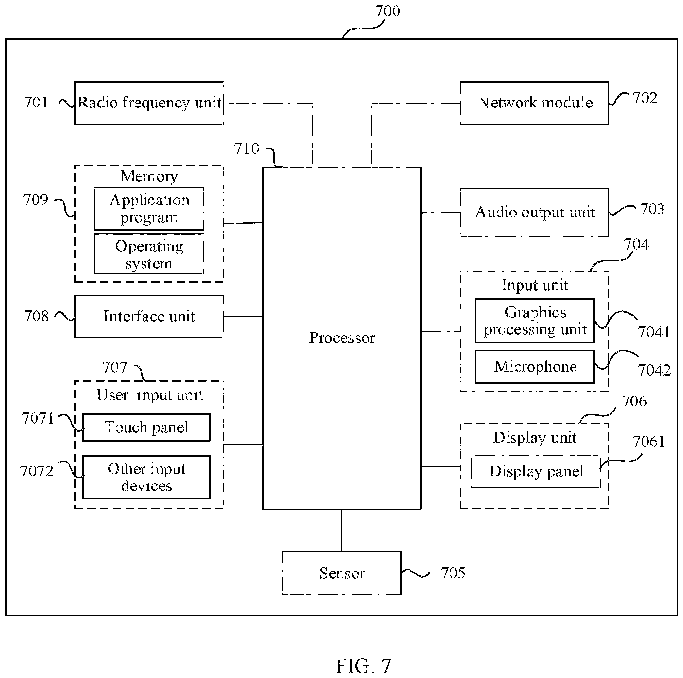

An embodiment of this application further provides a terminal, including a processor and a communication interface, the processor is configured to implement the steps of the foregoing embodiments of the data transmission method, and the communication interface is configured to communicate with an external device. The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may sends uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. The application processor primarily processes operations involving an operating system, user interfaces, application programs, and the like. The modem processor primarily processes radio communication signals, for example, being a baseband processor. It can be understood that the modem processor may alternatively be not integrated in the processor 710.

The processor 710 is configured to obtain a UE route selection policy URSP rule, where the URSP rule includes a first mapping relationship between at least one service type and route selection descriptor RSDs.

The radio frequency unit 701 is configured to transmit a to-be-sent data traffic of an application program based on the URSP rule.

An embodiment of this application further provides a network-side device, including a processor and a communication interface, the processor is configured to implement the steps of the foregoing embodiments of the URSP rule configuration method, and the communication interface is configured to communicate with an external device. The network-side device embodiments correspond to the foregoing network-side device method embodiments, and the implementation processes and implementations of the foregoing method embodiments can be applied to the network-side device embodiments, with the same technical effects achieved.

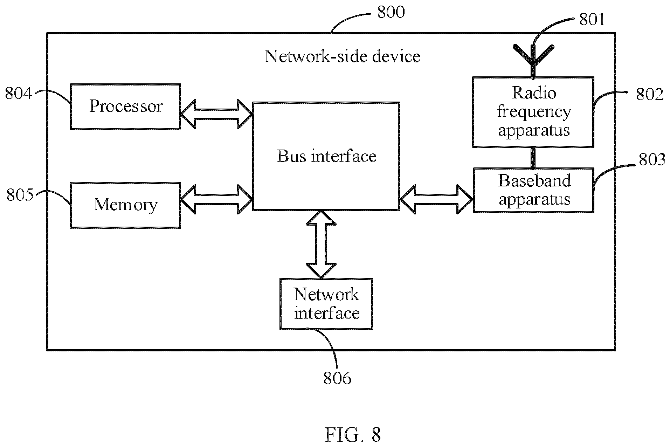

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-transmitted information, and sends the information to the radio frequency apparatus 802; and the radio frequency apparatus 802 processes the received information and then sends the information out by using the antenna 801.

The method executed by the network-side device in the foregoing embodiments can be implemented in the baseband apparatus 803, and the baseband apparatus 803 includes a baseband processor.

The baseband apparatus 803 may include, for example, at least one baseband board, where a plurality of chips are disposed on the baseband board. As shown in FIG. 8, one of the chips is, for example, a baseband processor, and is connected to the memory 805 through the bus interface, to invoke a program in the memory 805 to perform the operations of the network device shown in the foregoing method embodiments.

The network-side device may further include a network interface 806, where the interface is, for example, a common public radio interface (common public radio interface, CPRI).

Specifically, the network-side device 800 in this embodiment of the present invention further includes: instructions or a program stored in the memory 805 and capable of running on the processor 804. The processor 804 invokes the instructions or program in the memory 805 to execute the method executed by the modules shown in FIG. 5, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiments of the data transmission method are implemented or the processes of foregoing embodiments of the URSP rule configuration method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the data transmission method or the processes of foregoing embodiments of the URSP rule configuration method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the data transmission method or the processes of foregoing embodiments of the URSP rule configuration method, with the same technical effects achieved. To avoid repetition, details are not repeated herein.

An embodiment of this application further provides a data transmission system, including a terminal and a network-side device, where the terminal can be configured to execute the processes of the foregoing embodiments of the data transmission method, and the network-side device can be configured to execute the processes of foregoing embodiments of the URSP rule configuration method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A data transmission method, comprising:
obtaining, by a terminal, a UE route selection policy URSP rule, wherein the URSP rule comprises a first mapping relationship between at least one service type and route selection descriptor RSDs; and
transmitting a to-be-sent data traffic of an application program based on the URSP rule.

2. The method according to claim 1, wherein the URSP rule further comprises a traffic category descriptor, and the traffic category descriptor is associated with the first mapping relationship.

3. The method according to claim 1, wherein the first mapping relationship comprises an association relationship between at least one service type descriptor and RSDs, and the service type descriptor is used to indicate the service type.

4. The method according to claim 1, wherein the URSP rule further comprises a second mapping relationship between traffic description parameters and RSDs and/or a third mapping relationship between service performance description parameters and RSDs for a same service type.

5. The method according to claim 4, wherein the traffic description parameter comprises at least one of the following:
one or more pieces of destination IP address information;
one or more pieces of destination IP address segment information;
one or more pieces of fully qualified domain name information;
one or more pieces of fully qualified domain name information with wildcards;
one or more pieces of data network name DNN information; and
one or more application descriptions.

6. The method according to claim 4, wherein the service performance description parameter comprises at least one of the following:
one or more resolutions;
one or more resolution ranges;
one or more bandwidths;
one or more bandwidth ranges;
one or more end-to-end delays;
one or more end-to-end delay ranges;
computing power of one or more service servers; and
computing power range of one or more service servers.

7. The method according to any one of claims 1 to 6, wherein the transmitting a to-be-sent data traffic of an application program based on the URSP rule comprises:
obtaining a traffic characteristic parameter provided in the application program;
determining a target service type of the to-be-sent data traffic based on the traffic characteristic parameter;
selecting a target RSD matching the target service type from the URSP rule; and
transmitting the to-be-sent data traffic by using a protocol data unit PDU session corresponding to the target RSD.

8. The method according to claim 7, wherein the traffic characteristic parameter comprises at least one of the following:
first indication information, wherein the first indication information is used to indicate the service type;
target traffic description parameter; and
target service performance description parameter.

9. The method according to claim 8, wherein the determining a target service type of the to-be-sent data traffic based on the traffic characteristic parameter comprises one of the following:
determining a target service type of the to-be-sent data traffic according to the first indication information;
determining the target service type corresponding to the target traffic description parameter based on a preset correspondence between traffic description parameters and service types; and
determining the target service type corresponding to the target service performance description parameter based on a preset correspondence between service performance description parameters and service types.

10. The method according to claim 9, wherein
the determining the target service type corresponding to the target traffic description parameter based on a preset correspondence between traffic description parameters and service types comprises: obtaining a target traffic category descriptor matching the traffic characteristic parameter from the URSP rule, and obtaining the target service type corresponding to the target traffic description parameter from a first mapping relationship associated with the target traffic category descriptor; and
the determining the target service type corresponding to the target service performance description parameter based on a preset correspondence between service performance description parameters and service types comprises: obtaining a target traffic category descriptor matching the traffic characteristic parameter from the URSP rule, and obtaining the target service type corresponding to the target service performance description parameter from the first mapping relationship associated with the target traffic category descriptor.

11. The method according to claim 8, wherein the selecting a target RSD matching the target service type from the URSP rule comprises at least one of the following:
selecting a target RSD matching the target service type according to the first mapping relationship between service types and RSDs in the URSP rule;
obtaining the target service type through matching from the URSP rule, and selecting a target RSD matching the target traffic description parameter from a second mapping relationship between traffic description parameters and RSDs for the target service type; and
obtaining the target service type through matching from the URSP rule, and selecting a target RSD matching the target service performance description parameter from a third mapping relationship between service performance description parameters and RSDs for the target service type.

12. The method according to claim 11, wherein the selecting a target RSD matching the target service type according to the first mapping relationship between service types and RSDs in the URSP rule comprises:
obtaining a target traffic category descriptor matching the traffic characteristic parameter from the URSP rule, and selecting a target RSD matching the target service type according to a first mapping relationship associated with the target traffic category descriptor.

13. The method according to any one of claims 7 to 12, wherein the transmitting the to-be-sent data traffic by using a protocol data unit PDU session corresponding to the target RSD comprises one of the following:
selecting a target PDU session from established PDU sessions to transmit the to-be-transmitted data traffic of the application program, wherein the target PDU session is a PDU session corresponding to the target RSD; or
establishing a new PDU session corresponding to the target RSD by using a PDU session parameter contained in the target RSD to transmit the to-be-transmitted data traffic of the application program.

14. The method according to any one of claims 1 to 13, wherein the service type comprises one of the following:
IP address information of a data traffic sender;
service type tag;
service group;
application group;
group identifier;
video service;
enterprise service; and
gaming service.

15. The method according to any one of claims 1 to 14, wherein the obtaining, by a terminal, a UE route selection policy URSP rule comprises one of the following:
obtaining, by the terminal, the URSP rule from a network-side device; and
generating, by the terminal, the URSP rule.

16. A URSP rule configuration method, comprising:
obtaining, by a network-side device, a URSP rule, wherein the URSP rule comprises a first mapping relationship between at least one service type and route selection descriptor RSDs; and
configuring, by the network-side device, the URSP rule for a terminal.

17. The method according to claim 16, wherein the URSP rule further comprises a traffic category descriptor, and the traffic category descriptor is associated with the first mapping relationship.

18. The method according to claim 16, wherein the first mapping relationship comprises an association relationship between at least one service type descriptor and RSDs, and the service type descriptor is used to indicate the service type.

19. The method according to claim 16, wherein the URSP rule further comprises a second mapping relationship between traffic description parameters and RSDs and/or a third mapping relationship between service performance description parameters and RSDs for a same service type.

20. The method according to claim 19, wherein the traffic description parameter comprises at least one of the following:
one or more pieces of destination IP address information;
one or more pieces of destination IP address segment information;
one or more pieces of fully qualified domain name information;
one or more pieces of fully qualified domain name information with wildcards;
one or more pieces of data network name DNN information; and
one or more application descriptions.

21. The method according to claim 19, wherein the service performance description parameter comprises at least one of the following:
one or more resolutions;
one or more resolution ranges;
one or more bandwidths;
one or more bandwidth ranges;
one or more end-to-end delays;
one or more end-to-end delay ranges;
computing power of one or more service servers; and
computing power range of one or more service servers.

22. The method according to any one of claims 16 to 21, wherein the service type comprises one of the following:
IP address information of a data traffic sender;
service type tag;
service group;
application group;
group identifier;
video service;
enterprise service; and
gaming service.

23. A data transmission apparatus, comprising:
a first obtaining module, configured to obtain a UE route selection policy URSP rule, wherein the URSP rule comprises a first mapping relationship between at least one service type and route selection descriptor RSDs; and
a transmission module, configured to transmit a to-be-sent data traffic of an application program based on the URSP rule.

24. The apparatus according to claim 23, wherein that the transmission module transmits the to-be-sent data traffic of the application program based on the URSP rule comprises:
obtaining a traffic characteristic parameter provided in the application program;
determining a target service type of the to-be-sent data traffic based on the traffic characteristic parameter;
selecting a target RSD matching the target service type from the URSP rule; and
transmitting the to-be-sent data traffic by using a protocol data unit PDU session corresponding to the target RSD.

25. The apparatus according to claim 24, wherein
the traffic characteristic parameter comprises at least one of the following: first indication information, wherein the first indication information is used to indicate the service type; target traffic description parameter; and target service performance description parameter;
that the transmission module determines the target service type of the to-be-sent data traffic based on the traffic characteristic parameter comprises one of the following:
determining a target service type of the to-be-sent data traffic according to the first indication information;
determining the target service type corresponding to the target traffic description parameter based on a preset correspondence between traffic description parameters and service types; and
determining the target service type corresponding to the target service performance description parameter based on a preset correspondence between service performance description parameters and service types.

26. The apparatus according to claim 24, wherein
the traffic characteristic parameter comprises at least one of the following: first indication information, wherein the first indication information is used to indicate the service type; target traffic description parameter; and target service performance description parameter;
that the transmission module selects the target RSD matching the target service type from the URSP rule comprises at least one of the following:
selecting a target RSD matching the target service type according to the first mapping relationship between service types and RSDs in the URSP rule;
obtaining the target service type through matching from the URSP rule, and selecting a target RSD matching the target traffic description parameter from a second mapping relationship between traffic description parameters and RSDs for the target service type; and
obtaining the target service type through matching from the URSP rule, and selecting a target RSD matching the target service performance description parameter from a third mapping relationship between service performance description parameters and RSDs for the target service type.

27. The apparatus according to any one of claims 24 to 26, wherein that the transmission module transmits the to-be-sent data traffic by using the protocol data unit PDU session corresponding to the target RSD comprises one of the following:
selecting a target PDU session from established PDU sessions to transmit the to-be-transmitted data traffic of the application program, wherein the target PDU session is a PDU session corresponding to the target RSD; or
establishing a new PDU session corresponding to the target RSD by using a PDU session parameter contained in the target RSD to transmit the to-be-transmitted data traffic of the application program.

28. A URSP rule configuration apparatus, comprising:
a second obtaining module, configured to obtain a URSP rule, wherein the URSP rule comprises a first mapping relationship between at least one service type and route selection descriptor RSDs; and
a configuration module, configured to configure the URSP rule for a terminal.

29. The apparatus according to claim 28, wherein the URSP rule further comprises a traffic category descriptor, and the traffic category descriptor is associated with the first mapping relationship.

30. The apparatus according to claim 28, wherein the first mapping relationship comprises an association relationship between at least one service type descriptor and RSDs, and the service type descriptor is used to indicate the service type.

31. The apparatus according to claim 28, wherein the URSP rule further comprises a second mapping relationship between traffic description parameters and RSDs and/or a third mapping relationship between service performance description parameters and RSDs for a same service type.

32. A terminal, comprising a processor, a memory, and a program or instructions stored in the memory and capable of running on the processor, wherein when the program or the instructions are executed by the processor, the steps of the data transmission method according to any one of claims 1 to 15 are implemented.

33. A network-side device, comprising a processor, a memory, and a program or instructions stored in the memory and capable of running on the processor, wherein when the program or instructions are executed by the processor, the steps of the URSP rule configuration method according to any one of claims 16 to 22 are implemented.

34. A readable storage medium, wherein the readable storage medium stores a program or instructions, and when the program or instructions are executed by a processor, the steps of the data transmission method according to any one of claims 1 to 15 are implemented, or the steps of the URSP rule configuration method according to any one of claims 16 to 22 are implemented.
